# DEMANDE DE BREVET EUROPEEN

(11) **EP 1 821 197 A2**
(43) Date de publication de la demande: **22.08.2007**
(21) Numéro de dépôt: 07100938.5
(22) Date de dépôt: 22.01.2007
(51) Int. Cl.: G06F 9/30

(54) **Dispositif de traitement en notation polonaise inversée, et circuit intégré électronique comprenant un tel dispositif de traitement**

(30) Priorité: 24.01.2006 FR 0600648
(71) Demandeur: ATMEL NANTES SA, 44306 Nantes Cédex 3 (FR)
(72) Inventeur: GARNIER, Sylvain, 44300, NANTES (FR); FAIDHERBE, Bruno, 44980, SAINTE-LUCE-SUR-LOIRE (FR); MENARD, Patrice, 44850, SAINT-MARS-DU-DESERT (FR)
(74) Mandataire: Guéné, Patrick Lucien Juan Joseph

(57) **Abrégé**

L'invention concerne un dispositif de traitement en notation polonaise inversée, permettant d'exécuter un jeu d'instructions dans lequel chaque instruction comprend au maximum N opérandes, avec N≥ 1. Le dispositif met en oeuvre une gestion d'une pile dont la taille est variable.

Selon l'invention, un tel dispositif comprend :
- des moyens de mémorisation comprenant une mémoire vive (RAM) et une mémoire cache (R1, R2) ;
- des moyens (M0, M1, M2) de gestion d'un pointeur de pile ;
- des moyens (M0, M5, M6, M9, M3, M7, M8) de gestion des contenus des étages de la pile, en fonction dudit pointeur de pile :
* tels que, pour chacun des N premiers étages de la pile, le contenu de l'étage est stocké dans la mémoire cache, et pour chacun des autres étages de la pile, le contenu de l'étage est stocké dans la mémoire vive ;
* permettant de gérer des débordements de contenu, depuis la mémoire cache vers la mémoire vive, et inversement.

## Description

### 1. DOMAINE DE L'INVENTION

Le domaine de l'invention est celui des circuits électroniques.

Plus précisément, l'invention concerne un dispositif de traitement en notation polonaise inversée (ou RPN, pour « Reverse Polish Notation » en anglais), du type permettant l'exécution d'instructions venant d'une unité maître.

De façon classique, un tel dispositif de traitement comprend une pile (« stack » en anglais), de taille variable, gérée selon un mode « dernier entré premier sorti » (ou LIFO, pour « Last In First Out » en anglais), avec des pointeurs de pile. Cette pile permet de stocker sur des étages des contenus. Un contenu est par exemple un octet. Chaque instruction venant de l'unité maître opère sur le contenu d'au moins un étage. Une instruction (aussi appelée commande ou bien transaction) est composée d'un mot de code opération (ou « opcode ») et k mot(s) d'opérande (ou « mot(s) de données »), avec k≥0. Un jeu d'instructions comporte donc des instructions de tailles différentes (c'est-à-dire comprenant par exemple un, deux, trois ou quatre mots au total).

Il est important de noter que dans le présent document, le terme « pile » doit être compris, dans un sens large, comme tout plan mémoire permettant de stocker temporairement un ensemble de bits.

Le dispositif de traitement selon l'invention a de nombreuses applications, telles que par exemple la mise en oeuvre de calcul sur des nombres et/ou expressions algébriques.

Plus généralement, l'invention peut s'appliquer dans tous les cas où l'unité maître transmet au dispositif de traitement des instructions relatives à des opérations arithmétiques et/ou des manipulations de données.

### 2. ART ANTÉRIEUR

On présente maintenant les inconvénients de l'art antérieur, à travers l'application particulière précitée, dans laquelle le dispositif de traitement est implémenté de manière logicielle et exécuté par un microprocesseur.

La notation polonaise inversée, également connue sous le nom de notation post-fixée, permet d'effectuer des calculs sans utiliser de parenthèses. Dérivée de la notation polonaise présentée en 1920 par le mathématicien polonais Jan Lukasiewicz, elle s'en différencie par l'ordre des termes : les opérandes y sont présentés avant les opérateurs et non l'inverse.

De manière générale, la notation polonaise inversée permet de gérer des calculs sous forme de pile.

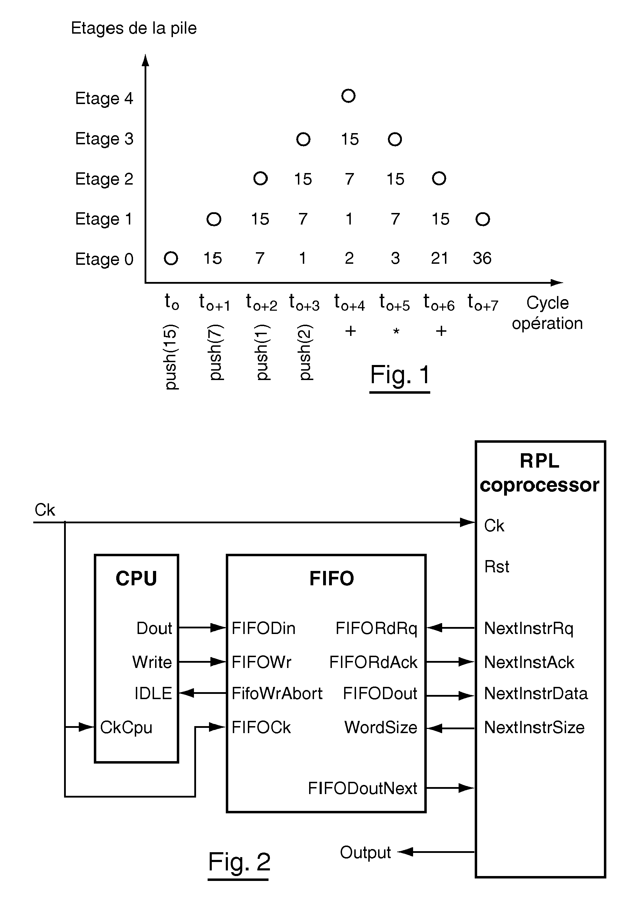

La figure 1 illustre un exemple de l'évolution d'une pile LIFO pour un cas particulier de calcul selon le principe de la notation polonaise inversée. On rappelle que la structure d'une pile LIFO repose sur le principe que la dernière donnée ajoutée à la structure sera ainsi la première à être retirée. Comme on le verra par la suite, le bilan d'une instruction sur la pile est soit nul, soit de 1, soit de -1.

Dans ce cas particulier, on veut effectuer l'opération : (2+1)*7 + 15.

Comme illustré sur la figure 1, cette opération est traduite par la séquence suivante : (on suppose qu'à l'instant t0, le premier étage de la pile, c'est-à-dire l'étage le plus bas dans la pile, noté Etage 0, est chargé avec la valeur « 0 »)
- à l'instant t0, on génère une instruction « push 15 » (la valeur « 15 » étant le dernier opérande de l'équation précitée) ;
- à l'instant t0+1, on exécute l'instruction « push 15 » (c'est-à-dire qu'on pousse la valeur « 15 » dans la pile), la valeur « 15 » est alors empilée sur Etage 0 (le bilan est de 1) et la valeur « 0 » est déplacée depuis le premier étage de la pile (Etage 0) vers le deuxième étage de la pile, noté Etage 1. A ce même instant t0+1, on génère une instruction « push 7 » ;
- à l'instant t0+2, on exécute l'instruction « push 7 », la valeur « 7 » est alors empilée sur Etage 0 (le bilan est de 1) et les déplacements suivants sont effectués (du fait qu'on a poussé la valeur « 7 » dans la pile) :
   o la valeur « 15 » est déplacée depuis Etage 0 vers Etage 1 ; et
   o la valeur « 0 » est déplacée depuis Etage 1 vers le troisième étage de la pile, noté Etage 2.

A ce même instant t0+2, on génère une instruction « push 1 » ;
- à l'instant t0+3, on exécute l'instruction « push 1 », la valeur « 1 » est alors empilée sur Etage 0 (le bilan est de 1) et les déplacements suivants sont effectués (du fait qu'on a poussé la valeur « 1 » dans la pile) :
   o la valeur « 7 » est déplacée depuis Etage 0 vers Etage 1 ;
   o la valeur « 15 » est déplacée depuis Etage 1 vers Etage 2 ; et
   o la valeur « 0 » est déplacée depuis Etage 2 vers le quatrième étage de la pile, noté Etage 3.

A ce même instant t0+3, on génère une instruction « push 2 » ;
- à l'instant t0+4, on exécute l'instruction « push 2 », la valeur « 2 » est alors empilée sur Etage 0 (le bilan est de 1) et les déplacements suivants sont effectués (du fait qu'on a poussé la valeur « 2 » dans la pile) :
   o la valeur « 1 » est déplacée depuis Etage 0 vers Etage 1 ;
   o la valeur « 7 » est déplacée depuis Etage 1 vers Etage 2 ;
   o la valeur « 15 » est déplacée depuis Etage 2 vers Etage 3 ; et
   o la valeur « 0 » est déplacée depuis Etage 3 vers le cinquième étage de la pile, noté Etage 4.

A ce même instant t0+4, on génère une instruction « + » correspondant à une addition des valeurs situées sur les Etages 1 et 0 ;
- à l'instant t0+5, on exécute l'instruction « + », la valeur « 1 » sur Etage 1 est alors additionnée avec la valeur « 2 » sur Etage 0, et le résultat de cette addition, c'est-à-dire la valeur « 3 », est stocké sur Etage 0 (le bilan est de - 1). Les déplacements suivants sont ensuite effectués (du fait qu'on a absorbé les valeurs « 1 » et « 2 ») :
   o la valeur « 7 » est déplacée depuis Etage 2 vers Etage 1;
   o la valeur « 15 » est déplacée depuis Etage 3 vers Etage 2 ; et
   o la valeur « 0 » est déplacée depuis Etage 4 vers Etage 3.

A ce même instant t0+5, on génère une instruction « * » correspondant à une multiplication des valeurs situées sur les Etages 1 et 0 ;
- à l'instant t0+6, on exécute l'instruction « * », la valeur « 7 » sur Etage 1 est alors multipliée par la valeur « 3 » sur Etage 0, et le résultat de cette multiplication, c'est-à-dire la valeur « 21 », est stocké sur Etage 0 (le bilan est de -1). Les déplacements suivants sont ensuite effectués (du fait qu'on a absorbé les valeurs « 7 » et « 3 ») :
   o la valeur « 15 » est déplacée depuis Etage 2 vers Etage 1 ; et
   o la valeur « 0 » est déplacée depuis Etage 3 vers Etage 2.

A ce même instant t0+6, on génère une instruction « + » correspondant à une addition des valeurs situées sur les Etages 1 et 0 ;
- à l'instant t0+7, on exécute l'instruction « + », la valeur « 15 » sur Etage 1 est alors additionnée avec la valeur « 21 » sur Etage 0, et le résultat de cette addition, c'est-à-dire la valeur « 36 », est stocké sur Etage 0 (le bilan est de - 1). Du fait qu'on a absorbé les valeurs « 15 » et « 21 », la valeur « 0 » est déplacée depuis Etage 2 vers Etage 1.

On connaît déjà de très nombreuses implémentations logicielles de la notation polonaise inversée.

A titre d'exemple, la société Hewlett Packard a développé une calculatrice dotée d'un langage de programmation postfixé appelé, lisp polonais inversé (ou RPL, pour « Reverse Polish Lisp » en anglais), selon lequel la pile est implémentée de manière logicielle à l'aide d'un microprocesseur Saturn 4-bit (commercialisé par Motorola) à architecture RISC (« Reduced Instruction-Set Computer » en anglais, pour « microprocesseur à jeu d'instruction réduit » en français).

Un des inconvénients de ce type d'implémentation, réside dans le fait qu'elle est très coûteuse en terme de ressources (mémoire, CPU,...).

Par ailleurs, cette implémentation connue présente l'inconvénient de nécessiter une surcouche logicielle.

En outre, les inventeurs ont constaté que l'utilisation d'une telle implémentation pouvait provoquer une forte consommation électrique.

### 3. OBJECTIFS DE L'INVENTION

L'invention a notamment pour objectif de pallier ces différents inconvénients de l'état de la technique.

Plus précisément, l'un des objectifs de la présente invention, dans au moins un mode de réalisation, est de fournir un dispositif de traitement en notation polonaise inversée qui soit simple à mettre en oeuvre de manière matérielle.

L'invention a également pour objectif de fournir un tel dispositif de traitement qui, dans au moins un mode de réalisation, soit notamment bien adapté à l'exécution d'opérations arithmétiques.

L'invention a encore pour objectif de proposer un tel dispositif de traitement qui, dans au moins un mode de réalisation, soit notamment bien adapté à la manipulation de données dans une pile.

L'invention a aussi pour objectif de proposer un tel dispositif de traitement qui, dans au moins un mode de réalisation, soit notamment bien adapté au décodage de flux audio.

Un autre objectif de l'invention est de proposer un tel dispositif de traitement qui, dans un mode de réalisation particulier, soit peu coûteux, notamment en terme de ressources.

Un autre objectif de l'invention est de proposer un tel dispositif de traitement qui, dans un mode de réalisation particulier, ne nécessite aucune surcouche logicielle.

Un autre objectif de l'invention est de proposer un tel dispositif de traitement qui, dans un mode de réalisation particulier, soit efficace, notamment en terme de consommation électrique.

### 4. EXPOSÉ DE L'INVENTION

Ces différents objectifs, ainsi que d'autres qui apparaîtront par la suite, sont atteints selon l'invention à l'aide d'un dispositif de traitement en notation polonaise inversée, permettant d'exécuter un jeu d'instructions dans lequel chaque instruction comprend au maximum N opérandes, avec N≥ 1, ledit dispositif mettant en oeuvre une gestion d'une pile dont la taille est variable.

Selon l'invention, le dispositif comprend :
- des moyens de mémorisation comprenant une mémoire vive et une mémoire cache ;
- des moyens de gestion d'un pointeur de pile qui est une adresse physique, dans ladite mémoire vive, associée à un étage de référence de la pile, chaque étage de la pile étant associé à une adresse physique, dans ladite mémoire vive, qui varie en fonction de la taille de la pile ;
- des moyens de gestion des contenus des étages de la pile, en fonction dudit pointeur de pile :
   * tels que, pour chacun des N premiers étages de la pile, le contenu dudit étage est stocké dans ladite mémoire cache, et pour chacun des autres étages de la pile, le contenu dudit étage est stocké dans ladite mémoire vive, à l'adresse physique associée audit étage ;
   * permettant de gérer des débordements de contenu, depuis la mémoire cache vers la mémoire vive, et inversement.

Ainsi, l'invention repose sur une approche tout à fait nouvelle et inventive de l'implémentation et la gestion d'une pile. En effet, l'invention propose d'associer une mémoire vive à une mémoire cache. L'utilisation combinée de la mémoire vive et la mémoire cache permet de mettre en oeuvre une pile LIFO, dans laquelle la dernière donnée ajoutée est stockée dans la mémoire cache. Cette configuration permet ainsi d'effectuer des traitements rapides de données (par exemple des opérations arithmétiques), du fait que les contenus des premiers étages de la pile sont stockés dans la mémoire cache. En outre, le mécanisme de gestion des mémoires vive et cache repose sur l'utilisation d'un pointeur qui pointe en permanence un étage déterminé de la pile (dit étage de référence), en d'autres termes ce pointeur pointe en permanence l'adresse physique (en mémoire vive) associée à cet étage de référence, de façon à contrôler les déplacements des contenus des étages de la pile par rapport à l'étage de référence.

Selon un aspect avantageux de l'invention, N est égal à 2. Dans un mode de réalisation préférentiel de l'invention, le dispositif est compris dans un co-processeur destiné à coopérer avec un processeur principal.

De façon avantageuse, ledit étage de référence de la pile est le premier étage de la pile.

Dans un autre mode de réalisation, l'invention concerne un circuit intégré électronique comprenant un dispositif de traitement tel que précité. Par circuit intégré électronique on entend notamment, mais non exclusivement, un processeur, un microprocesseur, un contrôleur, un microcontrôleur ou un coprocesseur.

### 5. LISTE DES FIGURES

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1, déjà commentée en relation avec l'art antérieur, est une représentation d'un exemple de l'évolution des contenus des étages d'une pile LIFO ;
- la figure 2 présente un synoptique d'un mode de réalisation particulier du système selon l'invention, dans lequel un dispositif d'interfaçage est placé entre l'unité maître et le dispositif de traitement ;
- la figure 3 est un schéma logique d'un mode de réalisation particulier du dispositif de traitement selon l'invention ;
- la figure 4 est un schéma logique d'un mode de réalisation particulier d'un mécanisme d'adressage d'une mémoire ROM implémenté dans un dispositif de traitement selon l'invention ;
- la figure 5 illustre la mise en oeuvre d'un mécanisme de traversée depuis un registre d'instruction vers un registre de calcul ;
- la figure 6 illustre la mise en oeuvre d'un mécanisme de traversée depuis un registre de calcul vers une mémoire vive ;
- la figure 7 est une représentation d'un exemple de l'évolution du plan mémoire et des registres de calcul d'un dispositif de traitement selon l'invention ;
- la figure 8 présente un schéma logique simplifié d'un mode de réalisation particulier d'un décodeur d'instruction traitant une instruction multicycles ;
- la figure 9 présente une machine d'état d'une instruction multicycles ; et
- la figure 10 est un schéma logique d'un mode de réalisation particulier d'une implémentation d'une pile dans une DPRAM.

### 6. DESCRIPTION D'UN MODE DE RÉALISATION PARTICULIER

Sur toutes les figures du présent document, les éléments ou signaux identiques sont désignés par une même référence alphanumérique.

L'invention concerne donc une architecture matérielle d'un dispositif de traitement en notation polonaise inversée capable de gérer de façon optimale des pointeurs d'une pile LIFO, dont les premiers étages sont mis en oeuvre dans une mémoire cache et les autres étages dans une mémoire vive. Le principe général de l'invention repose sur une technique de gestion des débordements de contenu des étages, depuis la mémoire cache vers la mémoire vive, et inversement.

### 6.1 Configuration particulière : interfaçage microprocesseur/co-processeur

A titre indicatif et non limitatif, on se place dans la suite de la description dans le cas de la configuration particulière suivante et illustrée sur la **figure 2**, dans laquelle un dispositif d'interfaçage (aussi appelé FIFO, pour « First In First Out » en anglais) est placé entre un microprocesseur (aussi appelé CPU, pour « Central Processing Unit » en anglais), jouant le rôle de l'unité maître, et un co-processeur, dans lequel est implanté (de manière matérielle) le dispositif de traitement de l'invention. Il est clair que l'invention peut être mise en oeuvre dans un co-processeur de type 8 bits, 16 bits, 32 bits, etc.

On rappelle que dans une telle configuration le co-processeur traite des flux d'information pour réduire la charge du microprocesseur. En effet, le microprocesseur transmet des instructions (c'est-à-dire des groupes de mots de taille variable), via le dispositif d'interfaçage, au co-processeur afin qu'il les exécute. Plus précisément, le co-processeur comprend un registre d'instruction alimenté par un mécanisme de requête/acquittement permettant l'exécution d'instructions monocycle ou multicycles et de gérer les famines lorsque aucune instruction n'est fournie.

Le dispositif d'interfaçage reçoit des requêtes de lecture provenant du co-processeur et des requêtes d'écriture provenant du microprocesseur. Ce dispositif d'interfaçage permet de stocker des mots venant du microprocesseur, via un bus d'entrée.

De façon plus détaillée, pour l'écriture de mots, le microprocesseur envoie des requêtes d'écriture (FIFOWr=1) et place des mots (par exemple des commandes à exécuter) sur le bus d'entrée (FIFODin) du dispositif d'interfaçage. Lorsque le dispositif d'interfaçage est plein, il envoie au microprocesseur un message d'indication de mémoire pleine (FifoWrAbort=1) afin que ce dernier cesse d'écrire, de façon à éviter toute corruption de données. Le microprocesseur est alors placé instantanément dans un mode IDLE (mode de mise en attente). Il n'en sortira que lorsque le dispositif d'interfaçage aura suffisamment d'espace libre.

Comme illustré sur la figure 2, pour la lecture de mots, le co-processeur envoie des requêtes de lecture (FIFORdRq=1) et lit des mots sur le bus de sortie (FIFODout) du dispositif d'interfaçage.

Dans un mode de réalisation préférentiel, le dispositif d'interfaçage fournit au co-processeur un signal FIFODoutNext, de façon que, pendant que le dispositif d'interfaçage sert une requête de lecture courante, le co-processeur puisse de manière anticipée obtenir une valeur présumée de l'instruction associée à une requête de lecture suivante et fournir au dispositif d'interfaçage la taille (WordSize) de l'instruction associée à cette requête de lecture suivante. Le co-processeur obtient la taille (WordSize) de l'instruction suivante en décodant le mot d'opcode de l'instruction suivante (présente sur FIFODoutNext), puis en utilisant le mot d'opcode décodé pour interroger une table de correspondance (non représentée) entre les mots d'opcode et les tailles d'instruction.

Le dispositif d'interfaçage comprend en outre des moyens d'acquittement de requêtes de lecture, générant pour chaque requête de lecture un signal d'acquittement avec une valeur « vrai » (FIFORdAck=1) si un nombre de mots au moins égal à la taille (WordSize) de l'instruction associés à cette requête de lecture est disponible sur le signal de sortie (FIFODout). Lorsque le dispositif d'interfaçage acquitte la requête de lecture, le registre d'instruction du co-processeur échantillonne les données présentes sur son entrée NextInstrData.

On note que le microprocesseur, le dispositif d'interfaçage et le co-processeur reçoivent la même horloge. Dans un mode de réalisation préférentiel, cette horloge peut provenir d'un pad oscillateur en entrée du circuit ou d'un bloc interne de génération d'horloge.

### 6.2 Description générale du dispositif de traitement

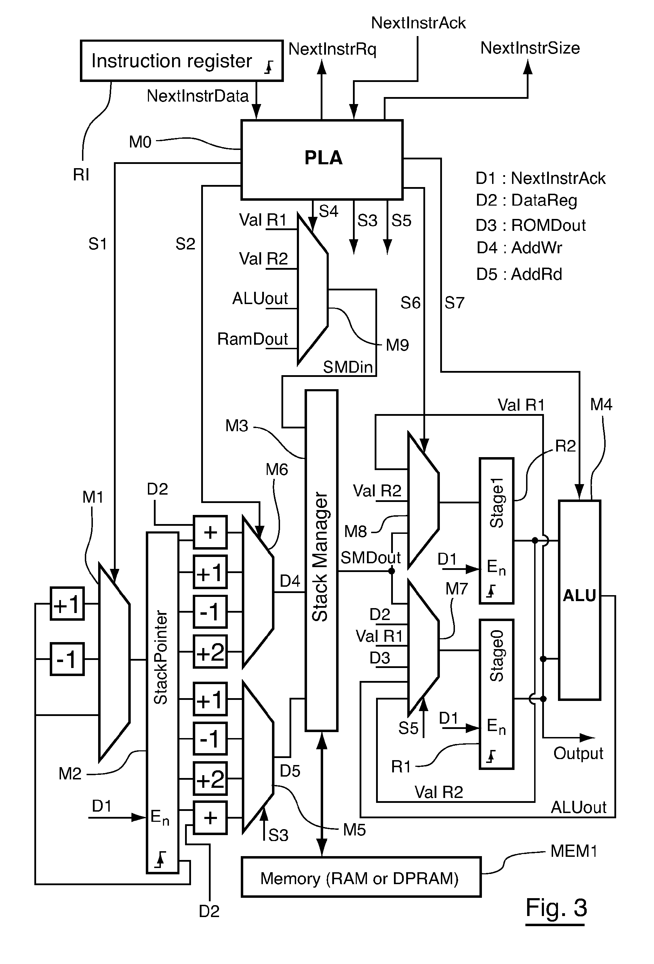

On décrit désormais en relation avec la figure 3 un dispositif de traitement selon un mode de réalisation préférentiel de l'invention.

Dans ce mode de réalisation, le dispositif de traitement selon l'invention est embarqué dans un co-processeur et comprend :
- des moyens de mémorisation comprenant une mémoire vive RAM (MEM 1) (pour « Random Access Memory » en anglais) et une mémoire cache ;
- des moyens M0, M1 et M2 de gestion d'un pointeur de pile qui est une adresse physique, dans la mémoire vive, associée à un étage de référence de la pile. Chaque étage de la pile étant associé à une adresse physique, dans la mémoire vive, qui varie en fonction de la taille de la pile. Dans le mode de réalisation illustré, l'étage de référence de la pile est le premier étage Etage 0 de la pile ;
- des moyens M0, M5, M6, M9, M3, M7 et M8 de gestion des contenus des étages de la pile, en fonction du pointeur de pile tels que, pour chacun des deux premiers étages de la pile Etage 0 et Etage 1, le contenu de l'étage est stocké dans la mémoire cache, et pour chacun des autres étages de la pile, le contenu de l'étage est stocké dans la mémoire vive, à l'adresse physique associée à l'étage. Comme on le verra par la suite, ces moyens permettent de gérer des débordements de contenu, depuis la mémoire cache vers la mémoire vive, et inversement.

Plus précisément, le dispositif de traitement selon l'invention comprend trois familles d'éléments :
- une famille d'éléments analogiques comprenant la mémoire vive RAM (MEM 1), dans laquelle est implémentée la pile. Dans un autre mode de réalisation, la pile peut être implémentée dans une mémoire DPRAM (MEM 2) (pour « Dual Port RAM » en anglais) ;
- une famille d'éléments séquentiels comprenant :
   o un registre d'instruction RI contenant l'instruction courante à exécuter ;
   o des registres de calcul R1 et R2 (appelés par la suite deuxième et troisième registre, respectivement), contenant les valeurs courantes des contenus des premier Etage 0 et deuxième Etage 1 étages de la pile, respectivement.
   Il est important de noter que dans le présent document, le terme « registre » doit être compris, dans un sens large, comme tout circuit permettant de stocker temporairement un ensemble de bits. La taille des registres précités est définie d'une part par le nombre d'instructions du coprocesseur et d'autre part par la précision de calcul que nécessite le traitement arithmétique. Dans la suite de la description, on suppose à titre d'exemple que la taille du registre d'instruction RI est de 5 bits et la taille des registres de calcul R1 et R2 est de 32 bits ;
- une famille d'éléments combinatoires comprenant :
   o un décodeur d'instruction M0, par exemple un PLA (pour « Programmable Logic Array » en anglais), qui traite l'instruction courante contenue dans le registre d'instruction RI (c'est-à-dire qu'il identifie le mot d'opcode de l'instruction), au moyen de microcode ;
   o un bloc de calcul arithmétique M4 (ou unité arithmétique et logique ALU (pour « Arithmetic Logic Unit » en anglais)) permettant d'exécuter une opération (qui est fonction de l'instruction courante), au moyen de macros arithmétiques ;
   o un registre M2 (appelé par la suite premier registre) (aussi connue sous le nom de « StackPointer manager ») contenant la valeur courante du pointeur de pile.

### 6.3 Implémentation d'une pile dans une DPRAM

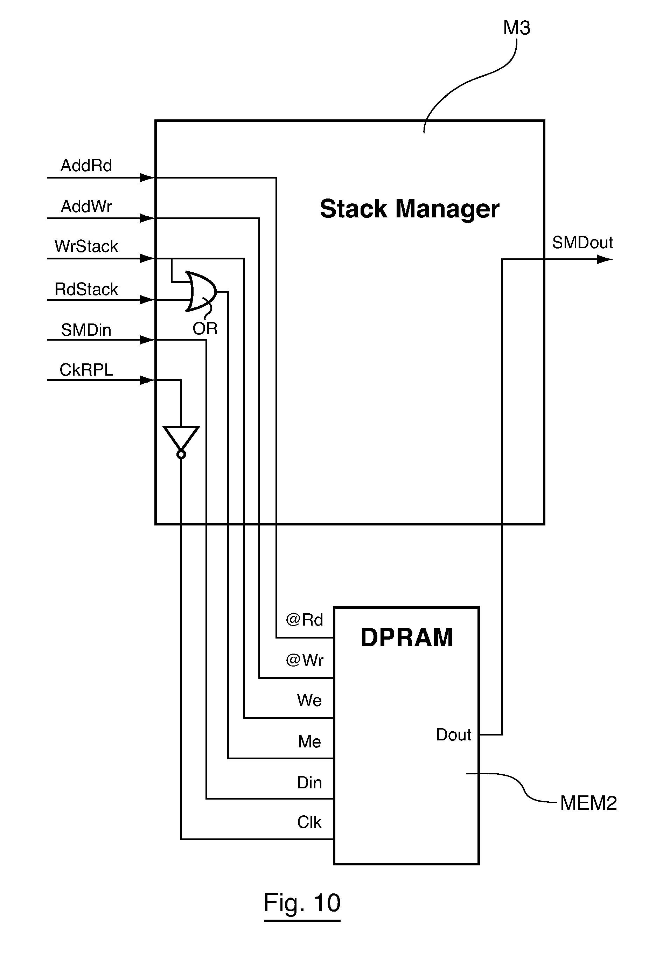

Comme déjà indiqué, le plan mémoire de la pile peut être implémenté dans une DPRAM. La **figure 10** illustre une telle implémentation.

Dans le mode de réalisation illustré, les entrées des moyens de contrôle M3 (aussi appelés par la suite Stack Manager) d'accès à la mémoire vive sont connectées aux entrées de la DPRAM (MEM 2), de façon à permettre une lecture (Me=1), une écriture (We=1), pas d'accès (Me=0) ou une lecture et une écriture dans la DPRAM.

Il est important de noter que pour effectuer un accès en lecture et/ou en écriture, l'entrée « memory enable » (Me) de la DPRAM doit être positionnée à « 1 ». Pour ce faire, les entrées WrStack et RdStack du Stack Manager sont connectées aux entrées d'une porte logique « ou » (OR), dont la sortie est reliée à l'entrée Me de la DPRAM.

Ainsi, l'entrée Me de la DPRAM est positionnée à « 1 » lorsque WrStack=1 et RdStack=0, WrStack=0 et RdStack=1 ou WrStack=1 et RdStack=1, en revanche, elle est positionnée à « 0 » lorsque WrStack=0 et RdStack=0.

De façon plus détaillée, pour l'écriture de mots, le Stack Manager M3 envoie un message d'indication d'écriture (WrStack=1) et précise l'adresse (AddWr) à laquelle on va écrire les mots transmis via le bus d'entrée (SMDin) du Stack Manager.

Pour la lecture de mots, le Stack Manager M3 envoie un message d'indication de lecture (RdStack=1) et précise l'adresse (AddRd) à laquelle on va lire les mots stockés dans le Stack Manager.

### 6.4 Description détaillée du dispositif de traitement

On va décrire maintenant, en relation avec la figure 3, les moyens de gestion du pointeur de pile et les moyens de gestion des contenus des étages de la pile spécifiques à l'invention.

Dans le mode de réalisation illustré, les moyens de gestion du pointeur de pile comprennent :
- un premier multiplexeur M1 possédant trois entrées recevant respectivement : la valeur courante (StackPointer) du pointeur de pile, la valeur courante du pointeur de pile incrémentée d'une unité (StackPointer+1), et la valeur courante du pointeur de pile décrémentée d'une unité (StackPointer-1). Ce premier multiplexeur M1 délivre en sortie l'une des trois valeurs d'entrée, en fonction d'un premier signal de commande S1 prenant en compte le bilan sur la pile, +1, - 1 ou 0, de l'instruction courante. En d'autres termes, le premier multiplexeur M1 fournit la prochaine adresse physique en mémoire du premier étage Etage 0 de la pile ;
- un premier registre M2 contenant la valeur courante du pointeur de pile (c'est-à-dire l'adresse physique courante en mémoire du premier étage de la pile), et dont l'entrée est reliée à la sortie du premier multiplexeur M1. Ce premier registre M2 est activé par un signal d'activation (En) indiquant qu'une instruction suivante est prête (NextInstrAck=1).

Pour gérer les contenus des étages de la pile, le dispositif de traitement comprend :
- des moyens de détermination de la prochaine adresse d'écriture AddWr dans la mémoire vive RAM. Ces moyens de détermination comprennent un deuxième multiplexeur M6 qui possède quatre entrées : la première entrée recevant la valeur courante (StackPointer) du pointeur de pile incrémentée d'un nombre d'unités DataReg indiqué dans un mot d'opérande de l'instruction courante, la deuxième entrée recevant la valeur courante du pointeur de pile incrémentée d'une unité (StackPointer+1), la troisième entrée recevant la valeur courante du pointeur de pile incrémentée de deux unité (StackPointer+2) et la quatrième entrée recevant la valeur courante du pointeur de pile décrémentée d'une unité (StackPointer-1). Le deuxième multiplexeur M6 délivre en sortie l'une des valeurs d'entrée, en fonction d'un deuxième signal de commande S2 qui est fonction de l'instruction courante ;
- des moyens de détermination de la prochaine adresse de lecture AddrRd dans la mémoire vive RAM. Ces moyens de détermination comprennent un troisième multiplexeur M5 qui possède quatre entrées : la première entrée recevant la valeur courante du pointeur de pile incrémentée du nombre d'unités DataReg, la deuxième entrée recevant la valeur courante du pointeur de pile incrémentée d'une unité, la troisième entrée recevant la valeur courante du pointeur de pile incrémentée de deux unité et la quatrième entrée recevant la valeur courante du pointeur de pile décrémentée d'une unité. Le troisième multiplexeur M5 délivre en sortie l'une des valeurs d'entrée, en fonction d'un troisième signal de commande S3 qui est fonction de l'instruction courante ;

Comme on le verra par la suite, certaines instructions permettent de lire ou écrire une donnée n'importe où dans la pile. Les moyens de détermination de la prochaine adresse d'écriture AddWr ou de lecture AddrRd selon l'invention permettent avantageusement de calculer l'adresse physique à atteindre relativement à la valeur courante du pointeur de pile ;
- des moyens de détermination de la prochaine données à écrire dans la mémoire vive RAM. Ces moyens comprennent un quatrième multiplexeur M9 qui possède quatre entrées, recevant respectivement : le contenu courant (Va1R1) du premier étage Etage 0 de la pile (c'est-à-dire le contenu du registre R1), le contenu courant (ValR2) du deuxième étage Etage 1 de la pile (c'est-à-dire le contenu du registre R2), une donnée SMDout lue dans la mémoire vive RAM lors de l'exécution de l'instruction courante, et une donnée ALUout calculée lors de l'exécution de l'instruction courante. Le quatrième multiplexeur M9 délivre en sortie l'une des valeurs d'entrée, en fonction d'un quatrième signal de commande S4 qui est fonction de l'instruction courante ;
- des moyens de détermination de la prochaine valeur à écrire dans la mémoire cache pour le contenu du premier étage. Ces moyens de détermination comprennent un cinquième multiplexeur M7 qui possède six entrées : la première entrée recevant la valeur courante (Va1R1) du contenu du premier étage Etage 0, la deuxième entrée recevant la valeur courante (ValR2) du contenu du deuxième étage Etage 1, la troisième entrée recevant la valeur DataReg, la quatrième entrée recevant la donnée SMDout, la cinquième entrée recevant la donnée ALUout et la sixième entrée recevant une donnée (RomDout) lue dans une mémoire morte ROM (MEM 3). Le cinquième multiplexeur M7 délivre en sortie l'une des valeurs d'entrée, en fonction d'un cinquième signal de commande S5 qui est fonction de l'instruction courante, par exemple :
   o si l'instruction courante est une instruction du type ne modifiant pas R1, alors le multiplexeur M7 délivre la valeur sur la première entrée ;
   o si l'instruction courante est une instruction du type « DROP », alors le multiplexeur M7 délivre la valeur sur la deuxième entrée ;
   o si l'instruction courante est une instruction du type « PUSH », alors le multiplexeur M7 délivre la valeur sur la troisième entrée ;
   o si l'instruction courante est une instruction du type « DUP », alors le multiplexeur M7 délivre la valeur sur la quatrième entrée ;
   o si l'instruction courante est une instruction du type « ADD », alors le multiplexeur M7 délivre la valeur sur la cinquième entrée ;

Il est important de noter que la mémoire cache comprend un deuxième registre R1 contenant la valeur courante du contenu du premier étage Etage 0. L'entrée du deuxième registre est reliée à la sortie du cinquième multiplexeur M7. Ce deuxième registre est activé par un signal d'activation (En) indiquant que l'instruction suivante est prête (NextInstrAck=1) ;
- des moyens de détermination de la prochaine valeur à écrire dans la mémoire cache pour le contenu du deuxième étage Etage 1. Ces moyens de détermination comprennent un sixième multiplexeur M8 qui possède trois entrées, recevant respectivement : la valeur courante du contenu du premier étage Etage 0, la valeur courante du contenu du deuxième étage Etage 1, et la donnée SMDout. Le sixième multiplexeur M8 délivre en sortie l'une des valeurs d'entrée, en fonction d'un sixième signal de commande S6 qui est fonction de l'instruction courante, par exemple :
   o si l'instruction courante est une instruction à bilan positif sur la pile, alors le multiplexeur M8 délivre le contenu du premier étage Etage 0 ;
   o si l'instruction courante est une instruction du type ne modifiant pas R2, alors le multiplexeur M8 délivre le contenu du deuxième étage Etage 1 ;
   o si l'instruction courante est une instruction du type « DUP », alors le multiplexeur M8 délivre la donnée SMDout.

On note que la mémoire cache comprend un troisième registre R2 contenant la valeur courante du contenu du deuxième étage Etage 1. L'entrée du troisième registre est reliée à la sortie du sixième multiplexeur M8. Ce troisième registre est activé par un signal d'activation (En) indiquant que l'instruction suivante est prête (NextInstrAck=1).

Pour exécuter une opération, qui est fonction de l'instruction courante, le dispositif de traitement comprend en outre un bloc de calcul arithmétique M4, possédant deux entrées recevant respectivement : la valeur courante du contenu du premier étage Etage 0 et la valeur courante du contenu du deuxième étage Etage 1. Ce bloc de calcul arithmétique M4 délivre en sortie la donnée ALUout calculée avec un opérateur arithmétique, par exemple un additionneur, un soustracteur, un multiplieur, etc., sélectionné par un septième signal de commande S7.

Comme illustré sur la figure 3, chaque signal de commande S1 à S7 est délivré par un décodeur d'instruction M0 qui traite l'instruction courante contenue dans le registre d'instruction RI.

Dans le présent mode de réalisation, le dispositif de traitement comprend en outre une mémoire morte ROM (pour « Read Only Memory » en anglais).

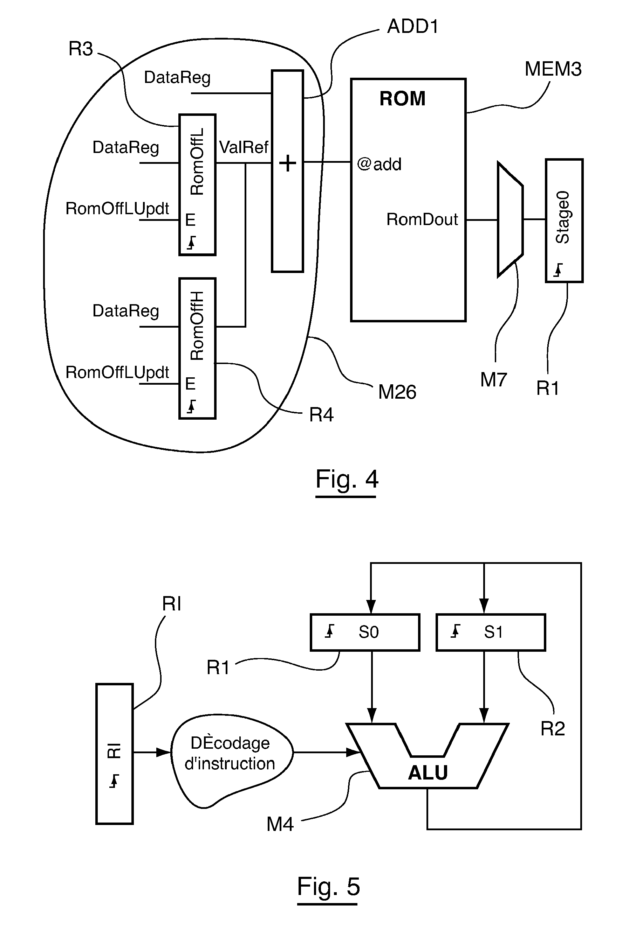

On décrit ci-après en référence à la **figure 4**, le mécanisme d'adressage d'une telle mémoire ROM (MEM 3).

Ce mécanisme d'adressage comprend des moyens M26 de détermination de la prochaine adresse de lecture dans la mémoire morte ROM. Les moyens M26 comprennent un additionneur (ADD1), permettant d'additionner la valeur DataReg, indiquée dans le mot d'opérande de l'instruction courante, avec une valeur de référence (VaIRef). La sortie de l'additionneur est reliée à la mémoire morte et constitue la prochaine adresse de lecture (@add) dans la mémoire morte. Comme déjà indiqué, la sortie (RomDout) de la mémoire morte ROM, sur laquelle se trouve la donnée lue, est reliée à la sixième entrée du cinquième multiplexeur M7.

Les moyens M26 de détermination de la prochaine adresse de lecture dans la mémoire morte ROM comprennent en outre un quatrième registre RomOffL (R3) contenant des bits de poids faible de la valeur de référence et un cinquième registre RomOffH (R4) contenant des bits de poids fort de la valeur de référence.

### 6.5 Chemin de données depuis le registre d'instruction RI vers les registres de calcul R1 et R2

On présente maintenant, en relation avec la **figure 5**, les chemins de données depuis le registre d'instruction RI vers les registres de calcul R1 et R2.

Les chemins de données critiques sont entre des éléments synchrones cadencés par la même horloge. Les chemins de données traversant le bloc de calcul arithmétique M4 doivent être maîtrisés car ils sont critiques d'un point de vue synchronisation. Il n'est donc pas souhaitable d'accéder directement à la mémoire vive RAM où les accès et les arbres d'horloge sont très difficilement caractérisés.

Ainsi, les deux étages bas de la pile Etage 0 et Etage 1 sont chacun implémenté de manière matérielle dans un registre R1 et R2 pour permettre la maîtrise des temps de traversée de la logique combinatoire, grâce à la prise en charge de ces contraintes par des outils de synthèse et de création d'arbres d'horloge.

Par outil de synthèse, on entend un outil permettant d'assurer une transcription d'une description d'un matériel hardware écrit en langage de haut niveau RTL (pour « Register Transfer Level » en anglais) en un équivalent fonctionnel écrit sous la forme d'une « netlist gate » (c'est-à-dire un ensemble de portes interconnectées).

De manière générale, toute porte logique ou toute interconnexion introduit des délais dans la propagation des signaux électriques. Un arbre d'horloge est obtenu lorsque tout élément synchrone sur une horloge reçoit cette dernière sans délai par rapport à tout autre élément synchrone recevant cette même horloge. C'est-à-dire que le déphasage entre deux entrées d'horloge de bascules du même domaine prises deux à deux est nul.

### 6.6 Chemin de données entre le registre de calcul R2 et la mémoire vive RAM

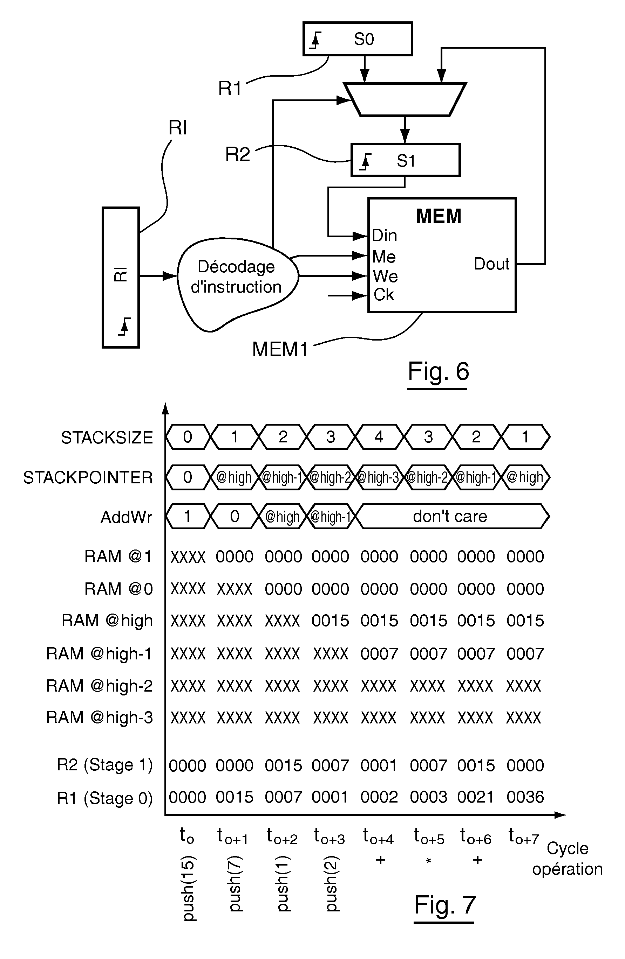

Comme illustré sur la figure 6, les accès à la mémoire vive RAM (MEM 1) se font soit quand une donnée déborde du registre R2, c'est-à-dire quand on déplace le contenu du deuxième étage de la pile vers le troisième étage de la pile, dans ce premier cas le bilan de la pile est positif ; soit quand une donnée est absorbée dans le registre R1 et qu'il faut mettre à jour le registre R2, c'est-à-dire déplacer le contenu du troisième étage de la pile vers le deuxième étage de la pile, dans ce deuxième cas le bilan de la pile est négatif.

Par souci de clarté, dans la suite de la description, les premier et deuxième étages de la pile sont notés S0 et S1, respectivement.

### 6.6.1 Présentation d'une instruction à bilan négatif sur la pile

On décrit ci-après une instruction permettant de mettre à jour le registre R2 avec le contenu du troisième étage de la pile en mémoire RAM.

Plus précisément, on décrit le microcode de l'instruction ADD32. Cette instruction ADD32 permet dans un premier temps d'additionner les contenus des premier S0 et deuxième S1 étages de la pile et dans un second temps d'actualiser le premier étage de la pile S0 avec le résultat de l'addition et le deuxième étage de la pile S1 avec le contenu du troisième étage.

Cette instruction ADD32 est traduite par la séquence suivante :
- S0 <= S0 + S1 : S0 prend la valeur du résultat de l'opération ;
- S1 <= Mem(StackPointer) : S1 est actualisé avec le contenu de l'étage supérieure de la pile (c'est-à-dire le troisième étage se trouvant dans le plan mémoire RAM) ;
- StackPointer <= StackPointer + 1 : par convention StackPointer est incrémenté quand le bilan d'une opération sur la pile est -1. StackPointer est l'adresse physique en mémoire RAM du premier étage de la pile. Le fait d'absorber un élément (c'est-à-dire le contenu d'un étage) fait que, par convention, on fait remonter le pointeur d'une unité.

On note que le bilan de la pile est négatif du fait que l'instruction ADD32 entraîne l'absorption de deux données opérandes pour le renvoi d'une donnée résultante.

### 6.6.2 Présentation d'une instruction à bilan positif sur la pile

On décrit ci-après une instruction permettant d'écrire le contenu du registre R2 au troisième étage de la pile en mémoire RAM.

Plus précisément, on décrit le microcode de l'instruction PUSH(data). Cette instruction PUSH(data) permet de déplacer les contenus des premier S0 et deuxième S1 étages de la pile vers les deuxième et troisième étages, respectivement.

Cette instruction PUSH(data) est traduite par la séquence suivante :
- Mem(StackPointer) <= S1 : le contenu du deuxième étage de la pile S1 déborde dans le plan mémoire RAM, c'est-à-dire qu'on écrit le contenu de l'étage S1 dans le troisième étage ;
- S1 <= S0 : le contenu du premier étage de la pile S0 est décalé vers le deuxième étage S1 ;
- S0 <= data : on rentre la valeur data dans le premier étage de la pile S0.

On note que le bilan de la pile est positif du fait que l'instruction PUSH(data) entraîne l'empilement d'une donnée supplémentaire.

### 6.7 Discussion des chronogrammes de la figure 7

La **figure 7** est une représentation d'un exemple de l'évolution du plan mémoire RAM et des registres R1 et R2 d'un dispositif de traitement selon l'invention.

En abscisse, on a représenté le cycle opération (c'est-à-dire une série d'instructions) et en ordonnée les informations suivantes :
- STACKSIZE, indiquant la taille courante de la pile (c'est-à-dire le nombre d'éléments dans la pile à l'instant courant) ;
- STACKPOINTER, indiquant la valeur courante du pointeur de pile, c'est-à-dire l'adresse physique courante dans le plan mémoire RAM du premier étage de la pile R1 ;
- AddWr, indiquant la prochaine adresse d'écriture du contenu du deuxième étage de la pile R2 dans le plan mémoire RAM. Il est important de noter que AddWr = STACKPOINTER + 1 ;
- RAM @1 à RAM @high-3, représentant les adresses physiques du plan mémoire RAM ;
- R1 et R2, représentant les premier et deuxième étages de la pile, respectivement.

Dans cet exemple, on veut effectuer l'opération : (2+1)*7 + 15.

Comme illustré sur la figure 7, cette opération est traduite par la séquence suivante : (on suppose qu'à l'instant t0, les premier et deuxième étages de la pile sont chargés avec la valeur « 0 », et que STACKPOINTER vaut 0)
- à l'instant t0, on génère une instruction « push 15 » (la valeur « 15 » étant le dernier opérande de l'équation précitée). Il est important de noter qu'à cet instant les premier et deuxième étages de la pile R1 et R2 ont pour adresse physique, les adresses RAM @0 et RAM @1, respectivement. En effet, à cet instant STACKPOINTER pointe l'adresse RAM @0. Par ailleurs, on note que la prochaine adresse d'écriture du contenu de R2 est RAM @1 ;
- à l'instant t0+1, on exécute l'instruction « push 15 », la valeur « 15 » est alors empilée sur R1 (le bilan sur la pile est de 1, STACKSIZE=1, il y a un élément dans la pile), le contenu de R1 « 0 » est déplacé vers R2, et le contenu de R2 « 0 » est déplacé dans le plan mémoire à l'adresse RAM @1. Les premier et deuxième étages de la pile R1 et R2 ont pour adresse physique, les adresses RAM @high et RAM @0, respectivement. En effet, à cet instant STACKPOINTER pointe l'adresse RAM @high. Par ailleurs, on note que la prochaine adresse d'écriture du contenu de R2 est RAM @0. A ce même instant, on génère une instruction « push 7 » ;
- à l'instant t0+2, on exécute l'instruction « push 7 », la valeur « 7 » est alors empilée sur R1 (le bilan sur la pile est de 1, STACKSIZE=2, il y a deux éléments dans la pile), le contenu de R1 « 15 » est déplacé vers R2, et le contenu de R2 « 0 » est déplacé dans le plan mémoire à l'adresse RAM @0. Les premier et deuxième étages de la pile R1 et R2 ont pour adresse physique, les adresses RAM @high-1 et RAM @high, respectivement. En effet, à cet instant STACKPOINTER pointe l'adresse RAM @high-1. Par ailleurs, on note que la prochaine adresse d'écriture du contenu de R2 est RAM @high. On note que le contenu stocké à l'adresse RAM @1 n'est pas modifié. A ce même instant, on génère une instruction « push 1 » ;
- à l'instant t0+3, on exécute l'instruction « push 1 », la valeur « 1 » est alors empilée sur R1 (le bilan sur la pile est de 1, STACKSIZE=3, il y a trois éléments dans la pile), le contenu de R1 « 7 » est déplacé vers R2, et le contenu de R2 « 15 » est déplacé dans le plan mémoire à l'adresse RAM @high. Les premier et deuxième étages de la pile R1 et R2 ont pour adresse physique, les adresses RAM @high-2 et RAM @high-1, respectivement. En effet, à cet instant STACKPOINTER pointe l'adresse RAM @high-2. Par ailleurs, on note que la prochaine adresse d'écriture du contenu de R2 est RAM @high-1. On note que les contenus stockés aux adresses RAM @1 et RAM @0 ne sont pas modifiés. A ce même instant, on génère une instruction « push 2 » ;
- à l'instant t0+4, on exécute l'instruction « push 2 », la valeur « 2 » est alors empilée sur R1 (le bilan sur la pile est de 1, STACKSIZE=4, il y a quatre éléments dans la pile), le contenu de R1 « 1 » est déplacé vers R2, et le contenu de R2 « 7 » est déplacé dans le plan mémoire à l'adresse RAM @high-1. Les premier et deuxième étages de la pile R1 et R2 ont pour adresse physique, les adresses RAM @high-3 et RAM @high-2, respectivement. En effet, à cet instant STACKPOINTER pointe l'adresse RAM @high-3. On note que les contenus stockés aux adresses RAM @1, @0 et @high ne sont pas modifiés. A ce même instant, on génère une instruction « + » (c'est-à-dire l'instruction ADD32). Comme on le verra par la suite, cette instruction a un bilan négatif sur la pile, il n'y aura donc aucune écriture dans le plan mémoire RAM (AddWr=don't care).
- à l'instant t0+5, on exécute l'instruction « + », le contenu de R2 « 1 » est alors additionné avec le contenu de R1 « 2 », et le résultat de cette addition « 3 » est stocké sur R1. A cet instant, STACKPOINTER pointe l'adresse RAM @high-2, les premier et deuxième étages de la pile R1 et R2 ont alors pour adresse physique, les adresses RAM @high-2 et RAM @high-1, respectivement. R2 étant vide (son contenu ayant été absorbé), il se charge avec le contenu « 7 » stocké à l'adresse RAM @high-1 (le bilan sur la pile est de -1, STACKSIZE=3). A ce même instant, on génère une instruction « * » (c'est-à-dire l'instruction MUL32).
- à l'instant t0+6, on exécute l'instruction « * », le contenu de R2 « 7 » est alors multiplié par le contenu de R1 « 3 », et le résultat de cette multiplication « 21 » est stocké sur R1. A cet instant, STACKPOINTER pointe l'adresse RAM @high-1, les premier et deuxième étages de la pile R1 et R2 ont alors pour adresse physique, les adresses RAM @high-1 et RAM @high, respectivement. R2 étant vide (son contenu ayant été absorbé), il se charge avec le contenu « 15 » stocké à l'adresse RAM @high (le bilan sur la pile est de -1, STACKSIZE=2). A ce même instant, on génère une instruction « + » (c'est-à-dire l'instruction ADD32).
- à l'instant t0+7, on exécute l'instruction « + », le contenu de R2 « 15 » est alors additionné avec le contenu de R1 « 21 », et le résultat de cette addition « 36 » est stocké sur R1. A cet instant, STACKPOINTER pointe l'adresse RAM @high, les premier et deuxième étages de la pile R1 et R2 ont alors pour adresse physique, les adresses RAM @high et RAM @0, respectivement. R2 étant vide (son contenu ayant été absorbé), il se charge avec le contenu « 0 » stocké à l'adresse RAM @0 (le bilan sur la pile est de - 1, STACKSIZE=1).

### 6.8 Jeu d'instructions

On présente en annexe 1 et 2, des exemples d'instructions exécutables par le dispositif de traitement selon l'invention. Ces annexes font partie intégrante de la présente description.

On peut notamment distinguer deux familles d'instructions : une famille arithmétique (annexe 1), permettant par exemple d'additionner les contenus des premier et deuxième étages d'une pile, et une famille de manipulation de données (annexe 2), permettant par exemple d'intervertir le contenu du premier étage d'une pile avec celui du x^{ième} étage.

### 6.9 Instruction multicycles

Comme déjà indiqué (figure 3), chaque signal de commande S1 à S7 est délivré par le décodeur d'instruction M0 (par exemple un PLA). Ce décodeur d'instruction M0 délivre en outre un signal de commande NextInstrRq qui est fonction du décodage de l'instruction courante.

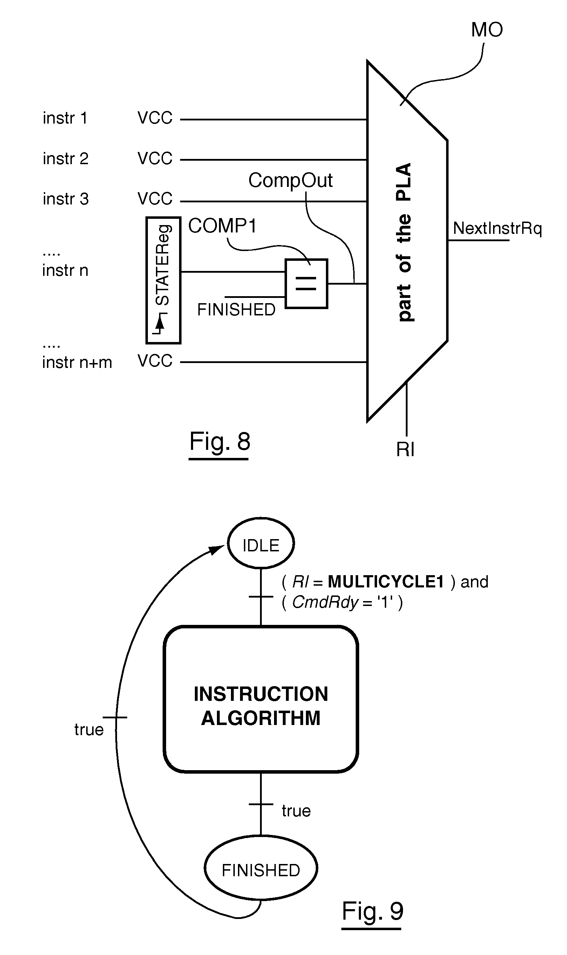

Dans le mode de réalisation illustré en **figure 8,** le PLA comprend un multiplexeur qui possède plusieurs entrées recevant chacune une tension d'alimentation haute VCC, indiquant la présence d'une instruction monocycle (instr 1, instr 2, instr3 et instr n+m), et une entrée recevant le signal de sortie (CompOut) d'un comparateur (COMP1), ce signal de sortie (CompOut) est égal à l'alimentation haute VCC lorsque l'instruction multicycles (instr n) est terminée. Ce multiplexeur délivre en sortie l'une des entrée, en fonction d'un signal de commande RI. Ainsi, pour une instruction monocycle, le signal de commande NextInstrRq prend automatiquement la valeur « 1 » (NextInstrRq=1), en revanche, pour une instruction multicycles, le signal de commande NextInstrRq prend la valeur « 1 » (NextInstrRq=1) lorsque l'instruction est terminée.

Comme illustré sur la **figure 9,** une instruction peut être implémentée sous la forme d'une machine d'état. Lorsque l'instruction MULTICYCLE1 est décodée (c'est-à-dire lorsque l'opcode de l'instruction est identifié par le PLA) et bien formée (CmdRdy = 1), la machine d'état quitte l'état de départ IDLE. A la fin de l'algorithme fonctionnel, le passage à l'état final FINISHED conditionne le passage à « 1 » du signal de commande NextInstrRq. Dans le mode de réalisation illustré en figure 3, le signal d'activation (NextInstrAck=1) du registre d'instruction RI et des registres de calcul R1 et R2 passe à « 1 » lorsqu'une instruction est disponible dans la FIFO de commande (non représentée), et ce après l'envoie d'une requête NextInstrRq du PLA vers la FIFO.

### ANNEXE 1 : Instructions arithmétiques

Le tableau ci-après récapitule les différentes instructions de la famille arithmétique. La première colonne du tableau indique le nom de l'instruction, la deuxième colonne précise l'argument (opérande), la troisième décrit l'opération arithmétique à effectuer et la dernière indique le bilan sur la pile.

| **ARITHMETIQUE** | | | |
|---|---|---|---|
| **ADD32** | none | S0<=S0+S1 | -1 |
| **SUB32** | none | S0<=S0-S1 | -1 |
| **SHIFTL** | none | S0<<=1 (unsigned) | 0 |
| **SHIFTRS** | none | S0>>=1 (signed) | 0 |
| **NORMFFLOAT** | none | WMA normalization of float Operands: iFraction : Stage1Reg iFracBits : Stage0Reg returns on stage1/stage0 the result | 0 |
| **RMAX** | none | Stage0 <= (Stage0<Stage1) ? Stage1 : Stage0 | -1 |
| **RMIN** | none | Stage0 <= (Stage0<Stage1) ? Stage0 : Stage1 | -1 |
| **NEG** | none | S0<=-S0+1 | 0 |
| **SHL8ADD**(x) | 8 bits | S0<=(S0<<8) 1 x | 0 |
| **FMULSH16** | none | if RPLCON0 = 0 then Stage0<=(uint32) (((int32))((B_operand>>11)+1)>>1))* ((int32)(A_operand>>16))) else FMULSH25 (WMA) Stage0<=(int32) ((((long long int)(((A_operand>>15)-1)>>1))* ((long long int)(((B_operand>>6)+1)))>>9) | -1 |

Par souci de clarté, dans la suite de la description, pour chacune des instructions listées dans le tableau ci-dessus, on précise le rôle de l'instruction et détaille sa mise en oeuvre matérielle, c'est-à-dire qu'on indique l'état ou l'action réalisée par chaque moyens M0 à M9 du dispositif de traitement selon l'invention.

### 1. Instruction ADD32

Cette instruction permet d'absorber les contenus des premier et deuxième étages et de les additionner, le résultat devenant le nouveau contenu du premier étage, avec un bilan -1 sur la pile.

Cette instruction ADD32 est traduite par la séquence suivante :
M0 : décode l'instruction ;
M4 : sélectionne l'opérateur d'addition de l'ALU, le multiplexeur de sortie de l'ALU est positionné sur la sortie de l'additionneur ;
M7 : sélectionne la sortie de l'ALU ;
M1 : sélectionne l'entrée correspondant à StackPointer + 1 (bilan -1 sur la pile) ;
M2: se réactualise au coup d'horloge suivant, si l'entrée enable du registre est à « 1 » (NextInstrAck=1) ;
M5 : sélectionne l'entrée correspondant à StackPointer + 1 (on va lire la donnée qui va rentrer dans R2),
M6 : état de repos (pas d'écriture prévue sur cette instruction et ce quelle que soit la sélection) ;
M9 : état de repos (pas d'écriture prévue sur cette instruction et ce quelle que soit la sélection) ;
M0 : positionne les entrées memory enable « Me » et write enable « We » de M3 à « 1 » et « 0 », respectivement, il y aura donc une lecture à l'adresse sélectionnée par M5 ;
M8 : sélectionne la sortie de StackManager

### 2. Instruction SUB32

Cette instruction permet d'absorber les contenus des premier et deuxième étages, de soustraire le contenu du deuxième étage au contenu du premier étage, le résultat devenant le nouveau contenu du premier étage, avec un bilan -1 sur la pile.

Cette instruction SUB32 est traduite par la séquence suivante :
M0 : décode l'instruction ;
M4 : sélectionne l'opérateur de soustraction de l'ALU, le multiplexeur de sortie de l'ALU est positionné sur la sortie du soustracteur ;
M7 : sélectionne la sortie de l'ALU ;
M1 : sélectionne l'entrée correspondant à StackPointer + 1 (bilan -1 sur la pile) ;
M2 : se réactualise au coup d'horloge suivant, si l'entrée enable du registre est à « 1 » (NextInstrAck=1) ;
M5 : sélectionne l'entrée correspondant à StackPointer + 2 (on va lire la donnée qui va rentrer dans R2)
M6 : état de repos ;
M9 : état de repos ;
M0 : positionne les entrées memory enable « Me » et write enable « We » de M3 à « 1 » et « 0 », respectivement, il y aura donc une lecture à l'adresse sélectionnée par M5 ;
M8 : sélectionne la sortie de StackManager.

### 3. Instruction SHIFTL

Cette instruction permet d'effectuer un décalage non signé à gauche d'un bit du contenu du premier étage, le résultat devenant le nouveau contenu du premier étage, avec un bilan 0 sur la pile.

Cette instruction SHIFTL est traduite par la séquence suivante :
M0 : décode l'instruction ;
M4 : sélectionne l'opérateur de décalage à gauche d'un bit ;
M7 : sélectionne la sortie de l'ALU ;
M1 : sélectionne l'entrée correspondant à StackPointer (bilan 0 sur la pile) ;
M2 : se réactualise au coup d'horloge suivant, si l'entrée enable du registre est à « 1 » (NextInstrAck=1) ;
M5 : état de repos ;
M6 : état de repos ;
M9 : état de repos ;
M0 : positionne les entrées memory enable « Me » et write enable « We » de M3 à « 0 », il n'y a ni lecture ni écriture ;
M8 : sélectionne l'entrée R2.

### 4. Instruction SHIFTRS

Cette instruction permet d'effectuer un décalage signé à droite d'un bit du contenu du premier étage, le résultat devenant le nouveau contenu du premier étage, avec un bilan 0 sur la pile.

Cette instruction SHIFTRS est traduite par la séquence suivante :
M0 : décode l'instruction ;
M4 : sélectionne l'opérateur de décalage à droite signé d'un bit (l'opérateur de décalage signé d'un bit à droite assigne l'ancien bit de poids fort au nouveau, de façon à conserver le signe) ;
M7 : sélectionne la sortie de l'ALU ;
M1 : sélectionne l'entrée correspondant à StackPointer (bilan 0 sur la pile) ;
M2 : se réactualise au coup d'horloge suivant, si l'entrée enable du registre est à « 1 » (NextInstrAck=1) ;
M5 : état de repos ;
M6 : état de repos ;
M9 : état de repos ;
M0 : positionne les entrées memory enable « Me » et write enable « We » de M3 à « 0 », il n'y a ni lecture ni écriture ;
M8 : sélectionne l'entrée R2.

### 5. Instruction NORMFFLOAT

Cette instruction permet de normaliser deux nombres présents sur les deux premiers étages de la pile si l'on considère que l'étage 1 contient iFraction qui représente une mantisse et l'étage 0 contient iFraeBits qui contient un exposant permettant de représenter une valeur en virgule flottante à l'aide de deux nombres en virgule fixe selon la formule suivante : value = iFraction * 2^(-iFracBits). Cela évite donc d'utiliser un coprocesseur FPU (pour « Floating Point Unit » en anglais) qui demande des ressources hardware ou software importantes.

Ainsi, multiplier deux nombres revient à multiplier les mantisses et à additionner les exposants. Mais il est nécessaire après une telle opération de normaliser le résultat. La mantisse peut être un multiple de deux ce qui impose d'incrémenter l'exposant et de diviser la mantisse autant de fois que la mantisse est divisible par 2.

Cette instruction NORMFFLOAT est traduite par la séquence suivante :

Instruction multicycle : A chaque cycle horloge :
M0 : décode l'instruction ;
M2 : StackPointer reste inchangé (bilan nul sur la pile) ;

### ACTION 0 :

M7 : sélectionne R1 (R1 reste inchangé) ;

### ACTION1 :

M8 : sélectionne la sortie d'un opérateur décalant R1 de 2 bits vers la gauche ;
M4 : sélectionne l'opérateur (R2)+2 ;
M7 : sélectionne la sortie de l'ALU ;

### ACTION 2 :

M8 : sélectionne la sortie d'un opérateur décalant R1 de 1 bit vers la gauche ;
M4 : sélectionne l'opérateur (R2)+1 ;
M7 : sélectionne la sortie de l'ALU ;

### ACTION 3 :

M8 : sélectionne la sortie d'un opérateur décalant R1 de 2 bits vers la gauche ;
M4 : sélectionne l'opérateur R2 + 2 ;
M7 : Sélectionne la sortie de l'ALU ;

### ACTION 4 :

M8 : sélectionne la sortie d'un opérateur décalant R1 de 1 bit vers la gauche ;
M4 : sélectionne l'opérateur R2+1 ;
M7 : sélectionne la sortie de l'ALU.

### 6. Instruction RMAX

Cette instruction permet d'absorber les contenus des premier et deuxième étages et de sélectionner le contenu de plus haute valeur, le résultat devenant le nouveau contenu du premier étage, avec un bilan -1 sur la pile.

Cette instruction RMAX est traduite par la séquence suivante :
M0 : décode l'instruction ;
M4 : sélectionne l'opérateur MAX, compare R1 à R2, renvoie le plus grand sur la sortie de l'ALU, S <= (R1<R2) ? R2 : R1 ;
M7 : sélectionne la sortie de l'ALU ;
M1 : sélectionne l'entrée correspondant à StackPointer + 1 (bilan -1 sur la pile) ;
M2 : se réactualise au coup d'horloge suivant, si l'entrée enable du registre est à « 1 » (NextInstrAck=1) ;
M5 : sélectionne l'entrée correspondant à StackPointer + 2 (on va lire la donnée qui va rentrer dans R2) ;
M6 : état de repos ;
M9 : état de repos ;
M0 : positionne les entrées memory enable « Me » et write enable « We » de M3 à « 1 » et « 0 », respectivement, il y aura donc une lecture de la future valeur de R2;
M8 : sélectionne la sortie de StackManager.

### 7. Instruction RMIN

Cette instruction permet d'absorber les contenus des premier et deuxième étages et de sélectionner le contenu de plus faible valeur, le résultat devenant le nouveau contenu du premier étage, avec un bilan -1 sur la pile.

Cette instruction RMIN est traduite par la séquence suivante :
M0 : décode l'instruction ;
M4 : sélectionne l'opérateur MIN, compare R1 à R2, renvoie le plus petit sur la sortie de l'ALU, S <= (R1<R2) ? R1 : R2 ;
M7 : sélectionne la sortie de l'ALU ;
M1 : sélectionne l'entrée correspondant à StackPointer + 1 (bilan -1 sur la pile) ;
M2 : se réactualise au coup d'horloge suivant, si l'entrée enable du registre est à « 1 » (NextInstrAck=1) ;
M5 : sélectionne l'entrée correspondant à StackPointer + 2 (on va lire la donnée qui va rentrer dans R2) ;
M6 : état de repos ;
M9 : état de repos ;
M0 : positionne les entrées memory enable « Me » et write enable « We » de M3 à « 1 » et « 0 », respectivement, il y aura donc une lecture de la future valeur de R2;
M8 : sélectionne la sortie de StackManager.

### 8. Instruction NEG

Cette instruction permet de renvoyer la valeur négative en complément à deux de la valeur contenue dans l'étage 0 de la pile. A titre d'exemple, si R1 contient 0x00000001, après l'exécution de l'instruction NEG, R1 contiendra 0xFFFFFFFF.

Cette instruction NEG est traduite par la séquence suivante :
M0 : décode l'instruction ;
M4 : sélectionne l'opérateur NEG, S = not(x) + 1 (not(X) est le complément de X);
M7 : sélectionne la sortie de l'ALU ;
M1 : sélectionne l'entrée correspondant à StackPointer (bilan nul sur la pile)
M2 : se réactualise au coup d'horloge suivant, si l'entrée enable du registre est à « 1 » (NextInstrAck=1) ;
M5 : état de repos ;
M6 : sélectionne l'entrée StackPointer ;
M9 : état de repos ;
M0 : positionne les entrées memory enable « Me » et write enable « We » de M3 à « 0 » ;
M8 : sélectionne l'entrée correspondant à R1.

### 9. Instruction SHL8ADD(x)

Cette instruction permet d'effectuer un décalage à gauche de 8 bits du contenu du premier étage et d'affecter la valeur x aux 8 bits de poids faible du contenu du premier étage, le résultat devenant le nouveau contenu du premier étage, avec un bilan 0 sur la pile.

Cette instruction SHL8ADD(x) est traduite par la séquence suivante :
M0 : décode l'instruction ;
M4 : soit S la sortie de l'ALU, S =(R1 <<8 ) | x ;
M7 : sélectionne la sortie de l'ALU ;
M1 : sélectionne l'entrée correspondant à StackPointer (bilan 0 sur la pile);
M2 : se réactualise au coup d'horloge suivant, si l'entrée enable du registre est à « 1 » (NextInstrAck=1) ;
M5 : état de repos ;
M6 : sélectionne l'entrée StackPointer ;
M9 : état de repos ;
M0 : positionne les entrées memory enable « Me » et write enable « We » de M3 à « 0 » ;
M8 : sélectionne l'entrée correspondant à R1.

### 10. Instruction FMULSH16 ou FMULSH25

FMULSH25 et FMULSH16 sont des multiplications approchées de deux entiers de 32 bits. FMULSH16 est utilisé exclusivement lors du décodage MP3 et FMULSH25 lors du décodage WMA. Sachant que lors des opérations arithmétiques suivant la multiplication on aura une perte de précision due aux opérations arithmétiques suivantes, on minimise la taille du multiplieur de façon à ce que l'erreur due aux simplifications soit inférieure à la précision finale du calcul. On minimise ainsi la taille du multiplieur d'où un gain en nombre de portes et une diminution de la consommation.

Cette instruction FMULSH16 ou FMULSH25 est traduite par la séquence suivante :
M0 : décode l'instruction ;
M4 : soit S la sortie de l'ALU,
si RPLCON.0 = 0 ;
alors FMULSH16 (cas MP3) ;
S =(uint32) (((int32)(((R2>>11)+1>>1)) * ((int32)(R1>>16))) ;
sinon FMULSH25 (cas WMA) ;
S =(int32) ((((long long int)(((R1>>15)+1)>>1)) * ((long long int)(((R2>>6)+1)>>1)))>>9) ;
M7 : sélectionne la sortie de l'ALU ;
M1 : sélectionne l'entrée correspondant à StackPointer +1 (bilan -1 sur la pile) ;
M2 : se réactualise au coup d'horloge suivant, si l'entrée enable du registre est à « 1 » (NextInstrAck=1) ;
M5 : sélectionne l'entrée correspondant à StackPointer + 2 (on va lire la donnée qui va rentrer dans R2) ;
M6 : sélectionne l'entrée StackPointer ;
M9 : état de repos ;
M0 : positionne les entrées memory enable « Me » et write enable « We » de M3 à « 1 » et « 0 », respectivement ;
M8 : sélectionne la sortie de StackManager.

### ANNEXE 2 : Instructions de manipulation de données

Le tableau ci-après récapitule les différentes instructions de la famille de manipulation de données. La première colonne du tableau indique le nom de l'instruction, la deuxième colonne précise l'argument (opérande), la troisième décrit l'opération arithmétique à effectuer et la dernière indique le bilan sur la pile.

| **MANIPULATION DE DONNEES** | | | |
|---|---|---|---|
| **SWAP(x)** | 8 bits | S0<=Sx Sx *<*= S0 | 0 |
| **DUP** | none | duplicate S0 | 1 |
| **DUPN(x)** | 8 bits | duplicate Sx | 1 |
| **DROP** | none | S0 | -1 |
| **PUSHD(x)** | 8 bits | push x onto stack | 1 |
| **SPLITW** | none | S1<=S0 HIGH S0 <= S0'LOW | 1 |
| **MERGEW** | none | S0<=(S1<<16)1(S0 & 0xFFFF) | -1 |
| **GETROM(x)** | 8 bits | push rom value at @(x+Rp1RomOffset) onto stack | 1 |
| **ROMOFFH(x)** | 7 bits | Rp1RomOffset HIGH <= x | 0 |
| **ROMOFFL(x)** | 8 bits | Rp1RomOffset'LOW <= x | 0 |

### 11. Instruction SWAP(x)

Cette instruction permet d'intervertir le contenu du premier étage avec celui du x^{ième} étage, avec un bilan 0 sur la pile.

Cette instruction RMAX est traduite par la séquence suivante :
M0 : décode l'instruction ;
M4 : état de repos ;
M7 : si x > 1, sélectionne la sortie de StackManager (on récupéré une valeur du plan mémoire) ;
si x=0, sélectionne R1 ;
si x=1, sélectionne R2 ;
M1 : sélectionne l'entrée correspondant à StackPointer (bilan 0 sur la pile);
M2 : se réactualise au coup d'horloge suivant, si l'entrée enable du registre est à « 1 » (NextInstrAck=1) ;
M5 : sélectionne l'entrée correspondant à StackPointer + datareg car on va lire à la position datareg dans la pile. Cette position est relative à StackPointer ;
M6 : sélectionne l'entrée correspondant à StackPointer + datareg car on va écrire à la position datareg dans la pile. Cette position est relative à StackPointer ;
M9 : sélectionne l'entrée correspondant à R1 ;
M0 : positionne les entrées memory enable « Me » et write enable « We » de M3 à « 1 », il y aura donc une lecture à l'adresse sélectionnée par M5 et une écriture à l'adresse sélectionnée par M6 ;
M8 : si x = 1, sélectionne l'entrée R1, sinon R2.

### 12. Instruction DUP

Cette instruction permet de dupliquer le contenu du premier étage dans le premier étage, avec un bilan +1 sur la pile.
Cette instruction DUP est traduite par la séquence suivante :
M0 : décode l'instruction ;
M4 : pas d'opération arithmétique, l'ALU n'est pas sélectionnée ;
M7 : sélectionne R2 ;
M1 : sélectionne l'entrée correspondant à StackPointer - 1 (bilan +1 sur la pile) ;
M2 : se réactualise au coup d'horloge suivant, si l'entrée enable du registre est à « 1 » (NextInstrAck=1) ;
M5 : état de repos ;
M6 : sélectionne l'entrée StackPointer + 1, la case physique correspondant à R2 dans le plan mémoire doit être mis à jour avec la donnée de R2 qui va être mise à jour avec l'ancienne valeur de R1 ;
M9 : sélectionne R2 ;
M0 : positionne les entrées memory enable « Me » et write enable « We » de M3 à « 0 » et « 1 », respectivement, il y aura une écriture pour sauver dans le plan mémoire l'ancienne valeur de R2 ;
M8 : sélectionne l'entrée R1.

### 13. Instruction DUPN(x)

Cette instruction permet de dupliquer le contenu du x^{ième} étage dans le premier étage, avec un bilan +1 sur la pile.
Cette instruction DUPN(x) est traduite par la séquence suivante :
M0 : décode l'instruction ;
M4 : pas d'opération arithmétique, l'ALU n'est pas sélectionnée ;
M7:
si x > 1, sélectionne la sortie de StackManager (on récupère une valeur du plan mémoire) ;
si x=0, sélectionne R1 ;
si x=1, sélectionne R2 ;
M1 : sélectionne l'entrée correspondant à StackPointer - 1 (bilan +1 sur la pile) ;
M2 : se réactualise au coup d'horloge suivant, si l'entrée enable du registre est à « 1 » (NextInstrAck=1) ;
M5 : sélectionne l'entrée correspondant à StackPointer + datareg car on va lire à la position datareg dans la pile. Cette position est relative à StackPointer ;
M6 : sélectionne l'entrée StackPointer + 1, la case physique correspondant à R2 dans le plan mémoire doit être mise à jour avec la donnée de R2 qui va être mise à jour avec l'ancienne valeur de R1 ;
M8 : sélectionne R1 ;
M0 : positionne les entrées memory enable « Me » et write enable « We » de M3 à « 1 », il y aura donc une lecture à l'adresse sélectionnée par M5 et une écriture à l'adresse sélectionnée par M6 ;
M9 : sélectionne R2.

### 14. Instruction DROP

Cette instruction permet de supprimer le contenu du premier étage, avec un bilan -1 sur la pile.
Cette instruction DROP est traduite par la séquence suivante :
M0 : décode l'instruction ;
M4 : pas d'opération arithmétique, l'ALU n'est pas sélectionnée ;
M7 : sélectionne R2 ;
M1 : sélectionne l'entrée correspondant à StackPointer +1 (bilan -1 sur la pile) ;
M2 : se réactualise au coup d'horloge suivant, si l'entrée enable du registre est à « 1 » (NextInstrAck=1) ;
M5 : sélectionne l'entrée correspondant à StackPointer + 2 (on va lire la donnée qui va rentrer dans R2) ;
M6 : état de repos ;
M9 : état de repos ;
M0 : positionne les entrées memory enable « Me » et write enable « We » de M3 à « 1 » et « 0 », respectivement, il y aura donc une lecture de la future valeur de R2 ;
M8 : sélectionne l'entrée StackManager.

### 15. Instruction PUSHD(x)

Cette instruction permet d'insérer dans le contenu du premier étage l'argument x de l'instruction, avec un bilan +1 sur la pile.

Cette instruction PUSHD(x) est traduite par la séquence suivante :
M0 : décode l'instruction ;
M4 : pas d'opération arithmétique, l'ALU n'est pas sélectionnée ;
M7 : sélectionne l'entrée DataReg qui correspond à la partie argument de l'instruction ;
M1 : sélectionne l'entrée correspondant à StackPointer - 1 (bilan +1 sur la pile) ;
M2 : se réactualise au coup d'horloge suivant, si l'entrée enable du registre est à « 1 » (NextInstrAck=1) ;
M5 : état de repos ;
M6 : sélectionne l'entrée StackPointer + 1, la case physique correspondant à R2 dans le plan mémoire doit être mise à jour avec la donnée sortante de R2 ;
M9 : sélectionne R2 ;
M0 : positionne les entrées memory enable « Me » et write enable « We » de M3 à « 0 » et « 1 », respectivement, il y aura une écriture à l'adresse sélectionnée par M6;
M8 : sélectionne l'entrée correspondant à R1.

### 16. Instruction SPLITW

Cette instruction permet d'absorber le contenu du premier étage et de renvoyer les 16 bits de poids faible dans le contenu du premier étage et les 16 bits de poids fort dans le contenu du deuxième étage, avec un bilan +1 sur la pile.

Cette instruction SPLITW est traduite par la séquence suivante :
M0 : décode l'instruction ;
M1 : sélectionne l'entrée correspondant à StackPointer -1 (bilan +1 sur la pile) ;
M7 : sélectionne l'entrée correspondant à "0000000000000000"&R1(15 downto 0) ;
M8 : sélectionne l'entrée correspondant à "0000000000000000"&R1(31 downto 16) ;
M6 : sélectionne l'entrée StackPointer + 1 ;
M9 : sélectionne l'entrée correspondant à R2.

### 17. Instruction MERGEW

Cette instruction permet d'absorber les contenus des premier et deuxième étages et de renvoyer dans le contenu du premier étage un mot dont les 16 bits de poids faible sont les 16 bits de poids faible du contenu du premier étage, et les 16 bits de poids fort les 16 bits de poids faible du contenu du deuxième étage, avec un bilan +1 sur la pile.

Cette instruction MERGEW est traduite par la séquence suivante :
M0 : décode l'instruction ;
M1 : sélectionne l'entrée correspondant à StackPointer +1 (bilan -1 sur la pile) ;
M7 : sélectionne l'entrée correspondant à &R2(15 downto 0)&R1(15 downto 0) ;
M8 : état de repos ;
M5 : sélectionne l'entrée StackPointer + 2.

### 18. Instruction GETROM(x)

Cette instruction permet d'insérer dans le contenu du premier étage le x^{ième} élément d'une mémoire morte (ROM), avec un bilan +1 sur la pile.

Cette instruction GETROM(x) est traduite par la séquence suivante :
M0 : décode l'instruction ;
M4 : pas d'opération arithmétique, l'ALU n'est pas sélectionnée ;
M7 : sélectionne la sortie de la ROM ;
M1 : sélectionne l'entrée correspondant à StackPointer - 1 (bilan +1 sur la pile) ;
M2 : se réactualise au coup d'horloge suivant, si l'entrée enable du registre est à « 1 » (NextInstrAck=1) ;
M5 : état de repos ;
M6 : sélectionne l'entrée StackPointer + 1, la case physique correspondant à R2 dans le plan mémoire doit être mise à jour avec la donnée sortante de R2 ;
M9 : sélectionne R2 ;
M0 : positionne les entrées memory enable « Me » et write enable « We » de M3 à « 0 » et « 1 », respectivement, il y aura une écriture à l'adresse sélectionnée par M6;
M8 : sélectionne l'entrée correspondant à R1 ;
M26 : détermine l'adresse ROM à accéder :
RomAdd = RomOffsetH&RomOffsetL + DataReg ;
(DataReg'ieme element apres celui pointe par le banc de registres ;
RomOffsetH&RomOffsetL).

### 19. Instruction ROMOFFH(x)

Cette instruction permet de mettre à jour avec la valeur x le contenu d'un registre « RomOffH » stockant des bits de poids fort d'une valeur de référence, avec un bilan 0 sur la pile.

Cette instruction ROMOFFH(x) est traduite par la séquence suivante :
M0 : décode l'instruction ;
M26 : met à jour le registre RomOffH à partir de DataReg.

### 20. Instruction ROMOFFL(x)

Cette instruction permet de mettre à jour avec la valeur x le contenu d'un registre « RomOffL » stockant des bits de poids faible d'une valeur de référence, avec un bilan 0 sur la pile.

Cette instruction ROMOFFL(x) est traduite par la séquence suivante :
M0 : décode l'instruction ;
M26 : met à jour le registre RomOffL à partir de DataReg.

## Revendications

1. Dispositif de traitement en notation polonaise inversée, permettant d'exécuter un jeu d'instructions dans lequel chaque instruction comprend au maximum N opérandes, avec N≥ 1, ledit dispositif mettant en oeuvre une gestion d'une pile dont la taille est variable, **caractérisé en ce qu'**il comprend :
- des moyens de mémorisation comprenant une mémoire vive (RAM) et une mémoire cache (R1, R2) ;
- des moyens (M0, M1, M2) de gestion d'un pointeur de pile qui est une adresse physique, dans ladite mémoire vive, associée à un étage de référence de la pile, chaque étage de la pile étant associé à une adresse physique, dans ladite mémoire vive, qui varie en fonction de la taille de la pile ;
- des moyens (M0, M5, M6, M9, M3, M7, M8) de gestion des contenus des étages de la pile, en fonction dudit pointeur de pile :
* tels que, pour chacun des N premiers étages de la pile, le contenu dudit étage est stocké dans ladite mémoire cache, et pour chacun des autres étages de la pile, le contenu dudit étage est stocké dans ladite mémoire vive, à l'adresse physique associée audit étage ;
* permettant de gérer des débordements de contenu, depuis la mémoire cache vers la mémoire vive, et inversement.

2. Dispositif selon la revendication 1, **caractérisé en ce que** N est égal à 2.

3. Dispositif selon l'une quelconque des revendications 1 et 2, **caractérisé en ce qu'**il est compris dans un co-processeur destiné à coopérer avec un processeur principal.

4. Dispositif selon l'une quelconque des revendications 1 à 3, **caractérisé en ce que** ledit étage de référence de la pile est le premier étage de la pile.

5. Dispositif selon l'une quelconque des revendications 1 à 4, **caractérisé en ce que** lesdits moyens de gestion du pointeur de pile comprennent :
- un premier multiplexeur (M1) :
* possédant trois entrées recevant respectivement : une valeur courante du pointeur de pile, ladite valeur courante du pointeur de pile incrémentée d'une unité, et ladite valeur courante du pointeur de pile décrémentée d'une unité ;
* délivrant en sortie l'une des trois valeurs d'entrée, en fonction d'un premier signal de commande (S1) prenant en compte le bilan sur la pile, +1, -1 ou 0, d'une instruction courante ;
- un premier registre (M2) contenant ladite valeur courante dudit pointeur de pile, l'entrée dudit premier registre (M2) étant reliée à la sortie dudit premier multiplexeur (M1), ledit premier registre (M2) étant activé par un signal d'activation (En) indiquant qu'une instruction suivante est prête (NextInstrAck=1).

6. Dispositif selon l'une quelconque des revendications 1 à 5, **caractérisé en ce que** lesdits moyens de gestion des contenus des étages de la pile comprennent des moyens (M6) de détermination de la prochaine adresse d'écriture (AddWr) dans ladite mémoire vive, comprenant eux-mêmes :
- un deuxième multiplexeur (M6) :
* possédant une pluralité d'entrées recevant chacune une valeur courante du pointeur de pile incrémentée ou décrémentée d'une valeur déterminée (+DataReg, +1, -1, +2) distincte pour chaque entrée ;
* délivrant en sortie l'une des valeurs d'entrée, en fonction d'un deuxième signal de commande (S2) qui est fonction d'une instruction courante.

7. Dispositif selon l'une quelconque des revendications 1 à 6, **caractérisé en ce que** lesdits moyens de gestion des contenus des étages de la pile comprennent des moyens de détermination de la prochaine adresse de lecture (AddrRd) dans ladite mémoire vive, comprenant eux-mêmes :
- un troisième multiplexeur (M5) :
* possédant une pluralité d'entrées recevant chacune une valeur courante du pointeur de pile incrémentée ou décrémentée d'une valeur déterminée (+DataReg, +1, -1, +2) distincte pour chaque entrée ;
* délivrant en sortie l'une des valeurs d'entrée, en fonction d'un troisième signal de commande (S3) qui est fonction d'une instruction courante.

8. Dispositif selon la revendication 6 ou 7, **caractérisé en ce que** ladite pluralité d'entrées du deuxième (M6) ou troisième (M5) multiplexeur comprend au moins deux entrées appartenant au groupe comprenant :
- une entrée recevant ladite valeur courante du pointeur de pile incrémentée d'un nombre d'unités (DataReg) indiqué dans un mot d'opérande de ladite instruction courante ;
- une entrée recevant ladite valeur courante du pointeur de pile incrémentée d'une unité ;
- une entrée recevant ladite valeur courante du pointeur de pile incrémentée de deux unité ;
- une entrée recevant ladite valeur courante du pointeur de pile décrémentée d'une unité.

9. Dispositif selon l'une quelconque des revendications 1 à 8, **caractérisé en ce que** lesdits moyens de gestion des contenus des étages de la pile comprennent des moyens de détermination de la prochaine données à écrire dans ladite mémoire vive, comprenant eux-mêmes :
- un quatrième multiplexeur (M9) :
* possédant quatre entrées recevant respectivement : le contenu courant du premier étage de la pile (stage 0), le contenu courant du deuxième étage de la pile (stage 1), une donnée (SMDout) lue dans la mémoire vive lors de l'exécution d'une instruction courante, et une donnée (ALUout) calculée lors de l'exécution d'une instruction courante ;
* délivrant en sortie l'une des valeurs d'entrée, en fonction d'un quatrième signal de commande (S4) qui est fonction d'une instruction courante.

10. Dispositif selon l'une quelconque des revendications 1 à 9, **caractérisé en ce que** lesdits moyens de gestion des contenus des étages de la pile comprennent des moyens de détermination de la prochaine valeur à écrire dans ladite mémoire cache pour le contenu du premier étage, comprenant eux-mêmes :
- un cinquième multiplexeur (M7) :
* possédant une pluralité d'entrées recevant chacune une valeur déterminée distincte ;
* délivrant en sortie l'une des valeurs d'entrée, en fonction d'un cinquième signal de commande (S5) qui est fonction d'une instruction courante ;
et **en ce que** ladite mémoire cache comprend un deuxième registre (R1) contenant une valeur courante du contenu du premier étage, l'entrée dudit deuxième registre étant reliée à la sortie dudit cinquième multiplexeur (M7), ledit deuxième registre étant activé par un signal d'activation (En) indiquant qu'une instruction suivante est prête (NextInstrAck=1).

11. Dispositif selon la revendication 10, **caractérisé en ce que** ladite pluralité d'entrées du cinquième multiplexeur (M7) comprend au moins deux entrées appartenant au groupe comprenant :
- une entrée recevant la valeur courante du contenu du premier étage ;
- une entrée recevant la valeur courante du contenu du deuxième étage ;
- une entrée recevant une valeur (DataReg) indiquée dans un mot d'opérande de ladite instruction courante ;
- une entrée recevant une donnée (SMDout) lue dans la mémoire vive lors de l'exécution d'une instruction courante ;
- une entrée recevant une donnée (ALUout) calculée lors de l'exécution d'une instruction courante.

12. Dispositif selon l'une quelconque des revendications 1 à 11, **caractérisé en ce que** lesdits moyens de gestion des contenus des étages de la pile comprennent des moyens de détermination de la prochaine valeur à écrire dans ladite mémoire cache pour le contenu du deuxième étage, comprenant eux-mêmes :
- un sixième multiplexeur (M8) :
* possédant une pluralité d'entrées recevant chacune une valeur déterminée distincte ;
* délivrant en sortie l'une des valeurs d'entrée, en fonction d'un sixième signal de commande (S6) qui est fonction d'une instruction courante ;
et **en ce que** ladite mémoire cache comprend un troisième registre (R2) contenant une valeur courante du contenu du deuxième étage, l'entrée dudit troisième registre étant reliée à la sortie dudit sixième multiplexeur (M8), ledit troisième registre étant activé par un signal d'activation (En) indiquant qu'une instruction suivante est prête (NextInstrAck=1).

13. Dispositif selon la revendication 12, **caractérisé en ce que** ladite pluralité d'entrées du sixième multiplexeur (M8) comprend au moins deux entrées appartenant au groupe comprenant :
- une entrée recevant la valeur courante du contenu du premier étage ;
- une entrée recevant la valeur courante du contenu du deuxième étage ;
- une entrée recevant une donnée (SMDout) lue dans la mémoire vive lors de l'exécution d'une instruction courante.

14. Dispositif selon l'une quelconque des revendications 1 à 13, **caractérisé en ce qu'**il comprend un bloc de calcul arithmétique (M4) :
- possédant deux entrées recevant respectivement : une valeur courante du contenu du premier étage et une valeur courante du contenu du deuxième étage ;
- délivrant en sortie une donnée (ALUout) calculée avec un opérateur arithmétique sélectionné, parmi une pluralité d'opérateurs, par un septième signal de commande (S7) qui est fonction d'une instruction courante.

15. Dispositif selon l'une quelconque des revendications 5 à 14, **caractérisé en ce que** chaque signal de commande (S1 à S7) est délivré par un décodeur d'instruction (M0) qui traite ladite instruction courante contenue dans un registre d'instruction (RI).

16. Dispositif selon l'une quelconque des revendications 10 à 15, **caractérisé en ce qu'**il comprend en outre une mémoire morte (ROM),
**en ce que** lesdits moyens de gestion des contenus des étages de la pile comprennent des moyens (M26) de détermination de la prochaine adresse de lecture dans ladite mémoire morte, comprenant eux-mêmes :
- un additionneur, permettant d'additionner une valeur (DataReg), indiquée dans un mot d'opérande d'une instruction courante, avec une valeur de référence, la sortie dudit additionneur étant reliée à la mémoire morte et constituant ladite prochaine adresse de lecture dans ladite mémoire morte ;
et **en ce que** la sortie de la mémoire morte (Do), sur laquelle se trouve la donnée lue, est reliée à une des entrées dudit cinquième multiplexeur (M7).

17. Dispositif selon la revendication 16, **caractérisé en ce que** lesdits moyens (M26) de détermination de la prochaine adresse de lecture dans la mémoire morte comprennent :
- un quatrième registre (RomOffL) contenant des bits de poids faible de ladite valeur de référence ;
- un cinquième registre (RomOffH) contenant des bits de poids fort de ladite valeur de référence.

18. Dispositif selon l'une quelconque des revendications 1 à 17, **caractérisé en ce que** ledit jeu d'instructions comprend au moins une instruction arithmétique appartenant au groupe comprenant :
- une instruction (ADD32) permettant d'absorber les contenus des premier et deuxième étages et de les additionner, le résultat devenant le nouveau contenu du premier étage, avec un bilan -1 sur la pile ;
- une instruction (SUB32) permettant d'absorber les contenus des premier et deuxième étages, de soustraire le contenu du deuxième étage au contenu du premier étage, le résultat devenant le nouveau contenu du premier étage, avec un bilan -1 sur la pile ;
- une instruction (MUL32) permettant d'absorber les contenus des premier et deuxième étages et de les multiplier, le résultat devenant le nouveau contenu du premier étage, avec un bilan -1 sur la pile ;
- une instruction (SHIFTL) permettant d'effectuer un décalage non signé à gauche d'un bit du contenu du premier étage, le résultat devenant le nouveau contenu du premier étage, avec un bilan 0 sur la pile ;
- une instruction (SHIFTRS) permettant d'effectuer un décalage signé à droite d'un bit du contenu du premier étage, le résultat devenant le nouveau contenu du premier étage, avec un bilan 0 sur la pile ;
- une instruction (NORMFFLOAT) permettant de normaliser deux nombres présents sur les deux premiers étages de la pile, le bilan sur la pile étant 0 ;
- une instruction (RMAX) permettant d'absorber les contenus des premier et deuxième étages et de sélectionner le contenu de plus haute valeur, le résultat devenant le nouveau contenu du premier étage, avec un bilan -1 sur la pile ;
- une instruction (RMIN) permettant d'absorber les contenus des premier et deuxième étages et de sélectionner le contenu de plus faible valeur, le résultat devenant le nouveau contenu du premier étage, avec un bilan -1 sur la pile ;
- une instruction (NEG) permettant de renvoyer la valeur négative en complément à deux de la valeur contenue dans le premier étage, cette valeur négative en complément à deux devenant le nouveau contenu du premier étage, avec un bilan 0 sur la pile ;
- une instruction (SHL8ADD(x)) permettant d'effectuer un décalage à gauche de 8 bits du contenu du premier étage et d'affecter la valeur x aux 8 bits de poids faible du contenu du premier étage, le résultat devenant le nouveau contenu du premier étage, avec un bilan 0 sur la pile ;
- une instruction (FMULSH16 ou FMULSH25) permettant d'effectuer une multiplication approchée de deux entiers de 32 bits, le résultat devenant le nouveau contenu du premier étage, avec un bilan -1 sur la pile.

19. Dispositif selon l'une quelconque des revendications 1 à 18, **caractérisé en ce que** ledit jeu d'instructions comprend au moins une instruction de manipulation de données appartenant au groupe comprenant :
- une instruction (SWAP(x)) permettant d'intervertir le contenu du premier étage avec celui du x^{ième} étage, avec un bilan 0 sur la pile ;
- une instruction (DUP) permettant de dupliquer le contenu du premier étage dans le premier étage, avec un bilan +1 sur la pile ;
- une instruction (DUPN(x)) permettant de dupliquer le contenu du x^{ième} étage dans le premier étage, avec un bilan +1 sur la pile ;
- une instruction (DROP) permettant de supprimer le contenu du premier étage, avec un bilan -1 sur la pile ;
- une instruction (PUSHD(x)) permettant d'insérer dans le contenu du premier étage l'argument x de l'instruction, avec un bilan +1 sur la pile ;
- une instruction (SPLITW) permettant d'absorber le contenu du premier étage et de renvoyer les 16 bits de poids faible dans le contenu du premier étage et les 16 bits de poids fort dans le contenu du deuxième étage, avec un bilan +1 sur la pile ;
- une instruction (MERGEW) permettant d'absorber les contenus des premier et deuxième étages et de renvoyer dans le contenu du premier étage un mot dont les 16 bits de poids faible sont les 16 bits de poids faible du contenu du premier étage, et les 16 bits de poids fort les 16 bits de poids faible du contenu du deuxième étage, avec un bilan +1 sur la pile ;
- une instruction (GETROM(x)) permettant d'insérer dans le contenu du premier étage le x^{ième} élément d'une mémoire morte (ROM), avec un bilan +1 sur la pile ;
- une instruction (ROMOFFH(x)) permettant de mettre à jour avec la valeur x le contenu d'un registre « RomOffH » stockant des bits de poids fort d'une valeur de référence, avec un bilan 0 sur la pile ;
- une instruction (ROMOFFL(x)) permettant de mettre à jour avec la valeur x le contenu d'un registre « RomOffL » stockant des bits de poids faible d'une valeur de référence, avec un bilan 0 sur la pile.

20. Circuit intégré électronique, **caractérisé en ce qu'**il comprend un dispositif de traitement selon l'une quelconque des revendications 1 à 19.
